Europäisches Patentamt

European Patent Office

Office européen des brevets

(19)

(11) Numéro de publication: **0 319 409 B1**

## (12) FASCICULE DE BREVET EUROPEEN

(45) Date de publication de fascicule du brevet: **16.09.92**

(51) Int. Cl.⁵: **B01D 8/00**, G21C 19/30

(21) Numéro de dépôt: **88403021.4**

(22) Date de dépôt: **30.11.88**

(54) **Piège froid pour la purification d'un métal liquide comportant des zones de piègeage séparées.**

(30) Priorité: **03.12.87 FR 8716786**

(43) Date de publication de la demande:
**07.06.89 Bulletin 89/23**

(45) Mention de la délivrance du brevet:
**16.09.92 Bulletin 92/38**

(84) Etats contractants désignés:
**BE DE GB IT NL**

(56) Documents cités:
EP-A- 0 012 074     EP-A- 0 136 117
EP-A- 0 167 040     DE-A- 2 062 117
US-A- 3 552 485     US-A- 4 506 513
US-A- 4 679 402

(73) Titulaire: **COMMISSARIAT A L'ENERGIE ATO-
MIOUE Etablissement de Caractère Scientifique Technique et Industriel
31/33, rue de la Fédération
F-75015 Paris(FR)**

(72) Inventeur: **Latge, Christian Résidence de La
Grande Terrasse
Bât. A Impasse Sainte Eutrope
F-13100 Aix en Provence(FR)**

(74) Mandataire: **Mongrédien, André et al
c/o BREVATOME 25, rue de Ponthieu
F-75008 Paris(FR)**

Rank Xerox (UK) Business Services

# Description

L'invention concerne un piège froid pour la purification de métaux liquides comportant des zones de piégeage séparées.

De manière plus précise, l'invention concerne un piège froid pour purifier un métal liquide contenant de l'oxygène et de l'hydrogène en solution, comportant :

- au moins une enceinte,
- un conduit d'alimentation pour introduire ledit métal liquide à purifier dans l'enceinte,
- un distributeur pour répartir le métal liquide à la périphérie de l'enceinte,
- des moyens de refroidissement situés à l'extérieur de l'enceinte et en aval du distributeur pour créer une zone de refroidissement du métal liquide à purifier,
- au moins un élément de rétention,
- un conduit d'évacuation pour évacuer le métal liquide purifié.

Les réacteurs nucléaires à neutrons rapides utilisent le sodium liquide comme fluide de refroidissement aussi bien pour le circuit primaire que pour les circuits secondaires. Au cours du fonctionnement, le sodium se charge en impuretés, principalement de l'oxyde et de l'hydrure de sodium. Il est nécessaire d'éliminer ces pollutions au moyen de pièges qui retiennent les impuretés en réduisant leur solubilité par refroidissement.

On connaît déjà (FR-A-1 549 434) un piège froid constitué par une enceinte contenant un échangeur économiseur, des moyens de refroidissement pour provoquer le refroidissement du métal liquide et un élément de rétention pour retenir les impuretés. Les moyens de refroidissement sont disposés à l'extérieur du récipient et comportent une chemise annulaire contenant un milieu stagnant et une canalisation de circulation d'un liquide réfrigérant entourant la paroi latérale du récipient. L'élément de rétention comporte des cylindres de laine d'acier inoxydable.

On connaît également (FR-A-2 070 919, UKAEA) un autre piège froid de ce type. Il comprend un conduit cylindrique disposé dans un récipient de manière à définir un espace annulaire. Une partie de la longueur du conduit est calorifugée de manière à limiter la transmission de chaleur du métal liquide circulant à l'intérieur et à l'extérieur de ce conduit. Des moyens extérieurs de refroidissement s'étendent au moins dans la région correspondant à la longueur du conduit qui est de nature calorifuge. Toutefois, dans ces pièges froids de purification de métaux liquides connus antérieurement, les oxydes et les hydrures sont piégés simultanément, c'est-à-dire au même endroit, dans des éléments de garnissage.

Il en résulte plusieurs inconvénients. Tout d'abord, la capacité du piège froid est limitée parce que les éléments de rétention servent à piéger à la fois les oxydes et les hydrures. Ils sont donc colmatés rapidement. Une autre raison de la limitation de la capacité du piège est le fait que l'hydrure, impureté prépondérante dans un circuit secondaire, est piégé dans le garnissage, donc dans la section de passage du sodium. Il sera donc nécessaire de changer de garnissage plusieurs fois au cours de la durée de vie de la centrale. De plus, lorsque l'on souhaitera régénérer les éléments de garnissage, il sera nécessaire de traiter simultanément les oxydes et les hydrures puisqu'ils ont été piégés par un seul et même élément de garnissage.

La présente invention a pour objet un piège froid pour la purification d'un métal liquide qui remédie à ces inconvénients. Il présente une capacité de piégeage accrue et permet en outre, de traiter séparément les oxydes et les hydrures en vue de leur régénération.

Cet objet est atteint conformément à l'invention grâce au fait que le piège froid comporte des zones de piégeage séparées pour les oxydes et les hydrures.

Plus précisément, le piège froid comporte des structures d'accrochage des hydrures, ces structures d'accrochage étant situées à l'intérieur de l'enceinte, au niveau des moyens de refroidissement extérieurs, ces moyens évacuant une quantité de chaleur au moins égale à 10 kW/m$^2$, ce qui provoque la cristallisation des hydrures dans cette zone.

Ces structures d'accrochage provoquent également des turbulences dans l'écoulement de métal liquide qui favorisent la nucléation des hydrures.

De plus, ces structures renforcent la tenue mécanique des dépôts, notamment en cas de dilatation thermique de la virole externe.

Grâce à ces caractéristiques, les hydrures, dont la cinétique de nucléation est plus rapide que celle des oxydes, se déposent sur la paroi froide de l'enceinte, précisément dans la zone où l'on place les structures d'accrochage, et en amont des éléments de garnissage. Ces éléments, maintenus isothermes à la température la plus froide du piège, ne sont par conséquent pas colmatés par les hydrures, mais servent essentiellement pour le piégeage des oxydes. Leur capacité de rétention vis-à-vis des oxydes est donc accrue. En conséquence, la durée de vie du piège entre deux régénérations est plus importante.

Par ailleurs, selon une autre caractéristique préférentielle de l'invention, le piège froid est constitué de deux parties démontables qui peuvent être séparées l'une de l'autre en vue du traitement des impuretés qu'elles contiennent. La première partie amont contient les structures d'accrochage des hydrures tandis que la partie aval contient des éléments de garnissage dans lesquels sont piégés les oxydes. Il est donc possible de traiter séparément chacune de ces impuretés. Leur traitement est donc facilité.

Selon un premier mode de mise en oeuvre, le piège froid pour purifier un métal liquide contenant de l'oxygène et de l'hydrogène en solution, comportant :

- une enceinte de circulation du métal liquide,
- un conduit d'alimentation pour introduire ledit métal liquide à purifier dans l'enceinte,
- un distributeur pour répartir le métal liquide à la périphérie de l'enceinte,
- une cheminée centrale définissant pour le métal liquide un trajet en épingle à cheveux entre une zone annulaire de descente de ce métal et une zone centrale de remontée en vue de son évacuation,
- un échangeur économiseur pour abaisser la température du métal entrant et réchauffer le métal sortant,
- des moyens de refroidissement situés à l'extérieur de l'enceinte et en aval du distributeur pour créer une zone de refroidissement du métal liquide à purifier,
- au moins un élément de rétention en aval des moyens de refroidissement,
- un conduit d'évacuation pour évacuer le métal liquide purifié,

se caractérise en ce qu'il comporte des structures d'accrochage des hydrures, ces structures d'accrochage étant situées à l'intérieur de l'enceinte et au niveau des moyens de refroidissement extérieurs, lesdits moyens de refroidissement évacuant un flux thermique d'au moins 10 kw/m$^2$ pour provoquer la cristallisation des hydrures, ainsi qu'une couche d'un isolant thermique disposé sur une paroi de ladite cheminée, cette couche d'isolant ayant pour fonction de limiter l'échange thermique sur la paroi de ladite cheminée.

Selon un deuxième mode, le piège froid pour purifier un métal liquide contenant de l'oxygène et de l'hydrogène en solution, comportant :

- deux enceintes de circulation du métal liquide,
- un conduit d'alimentation pour introduire ledit métal liquide à purifier dans l'enceinte,
- un distributeur pour répartir le métal liquide à la périphérie de l'enceinte,
- une cheminée centrale définissant pour le métal liquide un trajet en épingle à cheveux entre une zone annulaire de descente de ce métal et une zone centrale de remontée en vue de son évacuation,
- un échangeur économiseur pour abaisser la température du métal entrant et réchauffer le métal sortant,
- des moyens de refroidissement situés à l'extérieur de l'enceinte et en aval du distributeur pour créer une zone de refroidissement du métal liquide à purifier,
- au moins un élément de rétention en aval des moyens de refroidissement,
- un conduit d'évacuation pour évacuer le métal liquide purifié,

se caractérise en ce qu'il comporte des structures d'accrochage des hydrures, ces structures d'accrochage étant situées à l'intérieur de l'enceinte et au niveau des moyens de refroidissement extérieurs, lesdits moyens de refroidissement évacuant un flux thermique d'au moins 10 kw/m$^2$ pour provoquer la cristallisation des hydrures, ainsi qu'une couche d'un isolant thermique disposé sur une paroi de ladite cheminée, cette couche d'isolant ayant pour fonction de limiter l'échange thermique sur la paroi de ladite cheminée, et en ce que la seconde enceinte, située sous la première, raccordée à celle-ci par une bride contient plusieurs éléments de rétention concentriques séparés par des viroles, baignés par le courant de métal descendant en provenance des distributeurs situés au sommet de l'enceinte et alimentés par le métal sortant de la partie annulaire périphérique de l'enceinte, une cheminée centrale raccordée à la cheminée centrale de l'enceinte étant également prévue pour la remontée du métal dans l'enceinte.

Selon un troisième mode de mise en oeuvre, le piège froid pour purifier un métal liquide contenant de l'oxygène et de l'hydrogène en solution, comportant :

- deux enceintes de circulation du métal liquide,
- un conduit d'alimentation pour introduire ledit métal liquide à purifier dans l'enceinte,
- un distributeur pour répartir le métal liquide à la périphérie de l'enceinte,
- un échangeur économiseur pour abaisser la température du métal entrant et réchauffer le métal sortant,
- des moyens de refroidissement situés à l'extérieur de l'enceinte et en aval du distributeur pour créer une zone de refroidissement du métal liquide à purifier,
- au moins un élément de rétention en aval des moyens de refroidissement,
- un conduit d'évacuation pour évacuer le métal liquide purifié,

se caractérise en ce qu'il comporte des structures d'accrochage des hydrures, ces structures d'accrochage étant situées à l'intérieur de l'enceinte et au niveau des moyens de refroidissement extérieurs, lesdits moyens de refroidissement évacuant un flux thermique d'au moins 10 kw/m$^2$ pour provoquer la cristallisation des hydrures, en ce que la seconde enceinte reliée à la première enceinte par une canalisation contient plusieurs éléments de rétention séparés par des viroles et en ce que le conduit d'évacuation du métal purifié, hors de l'enceinte, débouche dans l'échangeur économiseur, extérieur aux enceintes au travers duquel pénètre le métal liquide chaud à purifier par le conduit d'alimentation dans la première enceinte.

D'autres caractéristiques et avantages de la présente invention apparaîtront à la lecture de la description qui suit d'un exemple de réalisation donné à titre illustratif et nullement limitatif en référence aux figures annexées, sur lesquelles :

- la figure 1 est une vue en coupe d'un premier mode de réalisation de l'invention,
- la figure 2 est une vue en coupe partielle d'un second mode de réalisation de l'invention,
- la figure 3 est une vue en coupe d'un troisième mode de réalisation de l'invention,
- les figures 4a, b, c, d représentent diverses variantes de réalisation d'une structure d'accrochage pour un piège froid conforme à l'invention.

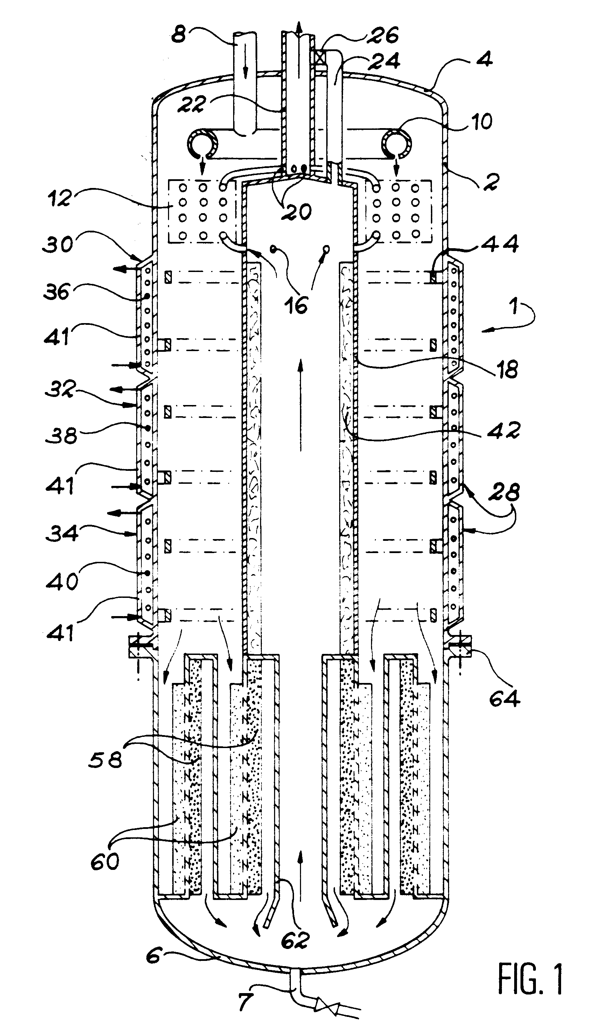

Le piège froid représenté sur la figure 1 comporte une enceinte 1 contituée par une virole 2 fermée par un fond supérieur 4 et un fond inférieur 6 muni d'une canalisation de vidange 7. L'enceinte 1 est destinée à recevoir le métal liquide à purifier. A cet effet, une canalisation 8 permet d'amener le sodium à purifier à un distributeur 10 qui se présente sous la forme d'un tore percé à sa partie inférieure d'orifices qui permettent de distribuer le sodium à la périphérie de l'enceinte. Le métal liquide à purifier traverse tout d'abord un échangeur économiseur désigné par la référence générale 12. L'échangeur 12 est constitué d'une multitude de tubes enroulés en spirale, chaque tube présentant une entrée 16 raccordée à une cheminée centrale 18 et une sortie 20 raccordée à une canalisation 22 pour l'évacuation du métal liquide hors du piège froid. Avant sa sortie du piège froid, le métal liquide purifié traverse les tubes en spirale 14. Ce métal purifié est relativement plus froid que celui qui entre. Il se produit par conséquent un échange de chaleur qui permet d'une part d'abaisser la température du métal entrant et d'autre part de récupérer une partie de la chaleur de ce métal pour réchauffer le sodium sortant.

Une dérivation ou by-pass 24 équipée d'une vanne 26 permet éventuellement d'évacuer directement une partie du sodium purifié de la cheminée centrale vers le conduit d'évacuation 22.

En aval de l'échangeur économiseur 12, dans le sens de circulation du métal, on trouve une zone de refroidissement désignée par la référence générale 28. Sur la paroi extérieure de l'enceinte sont disposés des modules de refroidissement 30, 32, 34, etc. Ces modules de refroidissement sont constitués par exemple par des serpentins tels que 36, 38, 40 parcourus par un fluide organique baignant dans un autre fluide stagnant qui sert de joint thermique à l'intérieur d'une enveloppe 41 dans laquelle stagne le fluide. Il peut s'agir également d'un système de refroidissement par air.

La cheminée centrale 18 délimite avec la paroi interne de la virole 2 un espace annulaire. Une couche d'un matériau isolant 42 est disposée sur l'une des faces, par exemple la face interne, de la cheminée 18. La couche d'isolant 42 a pour but d'éviter un échange de chaleur entre le sodium pollué pénétrant dans la zone de refroidissement 28 et le sodium relativement plus froid qui circule en montant dans la cheminée 18.

Conformément à l'invention, la température et la vitesse de circulation (le débit) du fluide de refroidissement des modules de refroidisement 30, 32, 34, etc., sont choisies de manière à assurer un flux thermique important au niveau de la virole 2 au moins égal à 10 kW/m$^2$, ce qui provoque la nucléation de l'hydrure sur la paroi froide de l'enceinte, et ainsi la formation de dépôts. Cet objectif est atteint d'autant plus facilement que l'effet d'échangeur-économiseur est limité au niveau de la cheminée 18 en la garnissant d'un matériau isolant.

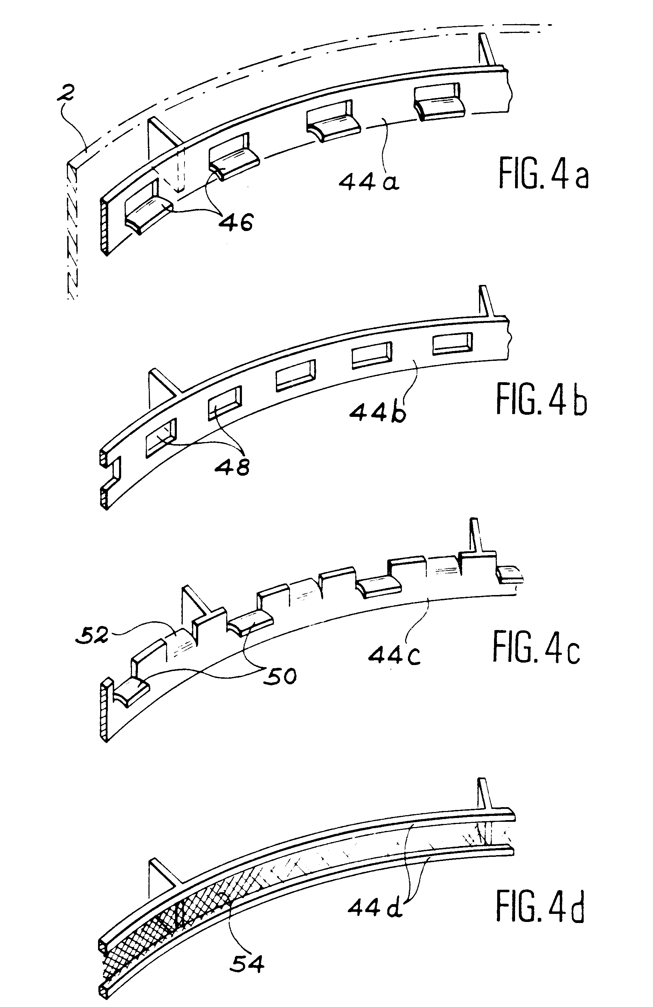

Conformément à l'invention, des structures d'accrochage 44 sont de préférence prévues sur la paroi intérieure de l'enceinte 2. Ces structures d'accrochage se présentent sous la forme d'anneaux fixés à une certaine distance de la paroi cylindrique de l'enceinte 2. Ces anneaux peuvent prendre différentes formes comme représenté sur les figures 4a à 4d. Sur la figure 4a, l'anneau 44a comporte des languettes 46 repliées vers l'intérieur de l'enceinte. Sur la figure 4b, l'anneau 44b comporte des ouvertures 48. Sur la figure 4c, l'anneau 44c comporte des languettes 50 repliées vers l'intérieur de l'enceinte et des languettes 52 repliées vers l'extérieur de cette enceinte. Enfin, sur la figure 4d, la structure d'accrochage est constituée de deux anneaux 44d reliés par un voile 54 constitué par exemple d'une toile métallique. Dans tous les cas, les fonctions des structures d'accrochage sont de créer des turbulences qui favorisent la nucléation de l'hydrure de sodium, et d'assurer la tenue mécanique de l'ensemble des dépôts formés, notamment en cas de dilatation thermique de la virole 2.

En aval de la zone de refroidisement 28, on trouve au moins un élément de rétention annulaire 58 constitué par exemple par un garnissage métallique. L'élément de rétention 58 est disposé dans la zone aval du piège, qui est une zone isotherme, étant donné qu'il n'existe pas d'échange de chaleur avec l'extérieur. Chacun des éléments de rétention 58 présente de préférence plusieurs couches de densité croissante dans le sens de l'écoulement du courant et permet de retenir l'oxyde de sodium

(Na$_2$O) qui ne cristallise pas sur les parois froides de la virole 2, mais sur le garnissage du filtre 58 en zone isotherme. En effet, bien que les mécanismes de nucléation des deux impuretés soient identiques - nucléation sur les surfaces métalliques ou cristallines déjà existantes et non dans le sodium liquide -, la cristallisation de l'oxyde de sodium nécessite un temps de séjour plus important parce que le coefficient de diffusion de l'hydrogène est plus élevé que celui de l'oxygène dans le sodium liquide et que la cinétique de nucléation de l'hydrure est plus rapide que celle des oxydes. Cette différence a pour conséquence une différence de mécanisme de purification dans le piège froid qui ne présente du garnissage que dans une zone, isotherme à la température du point froid, située en aval de la zone de refroidissement.

Afin d'augmenter la capacité de piégeage de l'élément de rétention 58, celui-ci peut être constitué de plusieurs éléments de rétention concentriques séparés par des viroles 60.

Une bride d'assemblage 64 permet de séparer la partie amont du piège froid de la partie aval, la partie amont renfermant la zone de refroidissement 28 avec les structures d'accrochage 44 des hydrures tandis que la zone aval renferme les éléments de rétention 58 comportant le garnissage métallique sur lequel cristallise l'oxyde de sodium. En conséquence, la partie amont et la partie aval peuvent être soumises à des traitements de régénération spécifiques.

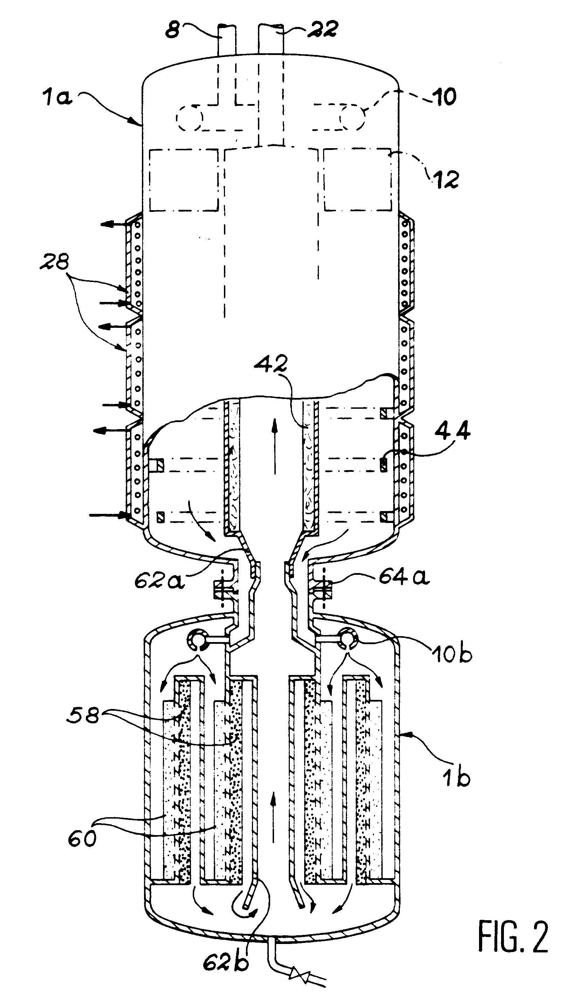

On a représenté sur la figure 2 une variante de réalisation du piège froid représenté sur la figure 1. La variante de réalisation de la figure 1 se distingue par le fait que le piège froid est constitué de deux enceintes, respectivement une enceinte amont 1a et une enceinte aval 1b. L'enceinte amont 1a contient les mêmes éléments que la partie amont du piège froid décrit en référence à la figure 1, à savoir un distributeur 10, un échangeur-économiseur 12 situé en aval du distributeur 10, une zone de refroidissement 28, une cheminée centrale 62a comportant une couche d'un isolant 42 des modules de refroidissement 30, 32, 34, etc., et des structures d'accrochage 44. La description de ces éléments ne sera par conséquent pas reprise.

La partie aval 1b contient essentiellement des éléments de garnissage 58 dont la constitution et le fonctionnement sont identiques à ceux qui ont été décrits en référence à la figure 1. En outre, l'enceinte 1b comporte un distributeur 10b constitué par un tore muni d'orifices à sa partie dirigée vers le bas afin de répartir le métal liquide à purifier dans l'enceinte 1b. Une cheminée centrale 62b permet la remontée du sodium. Cette cheminée centrale 62b est raccordée à la cheminée 62e de l'enceinte amont. En outre, une bride de raccordement 64a permet de raccorder l'une à l'autre les enceintes 1a et 1b.

Comme pour le mode de réalisation précédent, les deux enceintes peuvent être soumises à des traitements spécifiques.

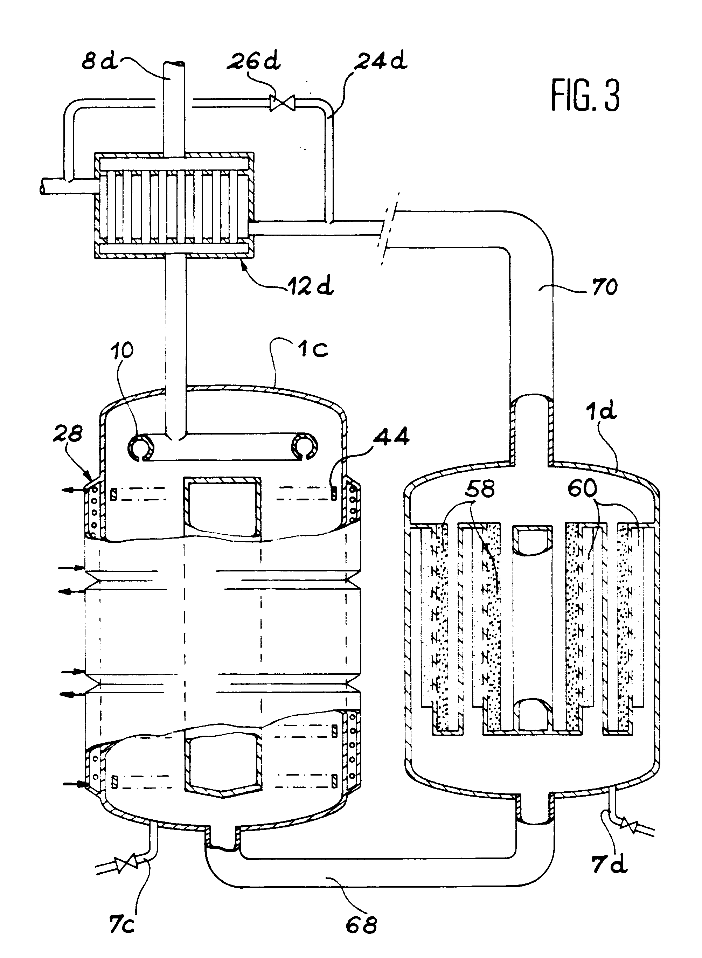

Enfin, on a représenté sur la figure 3 un troisième mode de réalisation du piège froid conforme à l'invention. Comme le mode de réalisation de la figure 2, ce piège froid est constitué de deux enceintes séparées, respectivement une enceinte amont 1c et une enceinte aval 1d. Toutefois, ces deux enceintes ne sont pas raccordées directement l'une à l'autre mais séparées par une canalisation 68. L'enceinte amont 1c comprend les mêmes éléments que l'enceinte 1a de la figure 2. Sa description ne sera par conséquent pas reprise en détail. De la même manière, l'enceinte 1d comporte les mêmes éléments que l'enceinte 1b de la figure 2. Toutefois, on n'a pas prévu de distributeur pour répartir le métal liquide à la périphérie de l'enceinte. En outre, l'enceinte 1c comporte un dispositif de vidange 7c et l'enceinte 1d comporte un dispositif de vidange 7d. Le fond supérieur de l'enceinte 1d est raccordé à une canalisation 70 d'évacuation du métal liquide purifié qui est raccordé à un échangeur-économiseur 12d. Une dérivation ou by-pass 24d permet d'évacuer le métal purifié sans passer par l'échangeur économiseur. Une vanne 26d est montée sur cette dérivation.

Le métal liquide chaud à purifier arrive à l'échangeur-économiseur par la canalisation 8d avant d'être introduit dans l'enceinte 1c. Bien que l'échangeur-économiseur soit extérieur à chacune des enceintes 1c et 1d, son fonctionnement est identique à celui de l'échangeur-économiseur 12 qui a été décrit en référence à la figure 1.

Grâce au piège froid conforme à l'invention qui vient d'être décrit, l'hydrure de sodium (NaH), qui résulte de la combinaison avec le sodium de l'hydrogène produit en continu dans le générateur de vapeur, est piégé isolément et en premier dans une zone se trouvant en amont des éléments de rétention 58. Toute la capacité de ces éléments de rétention peut donc être réservée pour l'oxyde Na$_2$O et la soude (NaOH).

En outre, l'hydrogène et le tritium étant piégés dans la partie amont et l'oxyde dans la partie aval du piège, il est possible, en séparant les deux parties, d'appliquer un mode spécifique de régénération à chaque impureté et donc de séparer les problèmes liés à la destruction de l'hydrure et de l'oxyde.

## Revendications

1. Piège froid pour purifier un métal liquide contenant de l'oxygène et de l'hydrogène en solution, comportant :

- une enceinte (1) de circulation du métal liquide,
- un conduit d'alimentation (8) pour introduire ledit métal liquide à purifier dans l'enceinte (1),
- un distributeur (10) pour répartir le métal liquide à la périphérie de l'enceinte,
- une cheminée centrale (18) définissant pour le métal liquide un trajet en épingle à cheveux entre une zone annulaire de descente de ce métal et une zone centrale de remontée en vue de son évacuation,
- un échangeur économiseur (12) pour abaisser la température du métal entrant et réchauffer le métal sortant,
- des moyens de refroidissement (30, 32, 34) situés à l'extérieur de l'enceinte (1) et en aval du distributeur (10) pour créer une zone de refroidissement (28) du métal liquide à purifier,
- au moins un élément de rétention (58) en aval des moyens de refroidissement,
- un conduit d'évacuation (22) pour évacuer le métal liquide purifié,

caractérisé en ce qu'il comporte des structures d'accrochage (44) des hydrures, ces structures d'accrochage étant situées à l'intérieur de l'enceinte (1) et au niveau des moyens de refroidissement extérieurs (30, 32, 34), lesdits moyens de refroidissement (30, 32, 34) évacuant un flux thermique d'au moins 10 kw/m$^2$ pour provoquer la cristallisation des hydrures, ainsi qu'une couche d'un isolant thermique (42) disposé sur une paroi de ladite cheminée (18), cette couche d'isolant (42) ayant pour fonction de limiter l'échange thermique sur la paroi de ladite cheminée (18).

2. Piège froid pour purifier un métal liquide contenant de l'oxygène et de l'hydrogène en solution, comportant :
   - deux enceintes (1a, 1b) de circulation du métal liquide,
   - un conduit d'alimentation (8) pour introduire ledit métal liquide à purifier dans l'enceinte (1a),
   - un distributeur (10) pour répartir le métal liquide à la périphérie de l'enceinte (1a),
   - une cheminée centrale (18) définissant pour le métal liquide un trajet en épingle à cheveux entre une zone annulaire de descente de ce métal et une zone centrale de remontée en vue de son évacuation,
   - un échangeur économiseur (12) pour abaisser la température du métal entrant et réchauffer le métal sortant,
   - des moyens de refroidissement (30, 32, 34) situés à l'extérieur de l'enceinte (1a) et en aval du distributeur (10) pour créer une zone de refroidissement (28) du métal liquide à purifier,
   - au moins un élément de rétention (58) en aval des moyens de refroidissement,
   - un conduit d'évacuation (22) pour évacuer le métal liquide purifié,

caractérisé en ce qu'il comporte des structures d'accrochage (44) des hydrures, ces structures d'accrochage étant situées à l'intérieur de l'enceinte (1a) et au niveau des moyens de refroidissement extérieurs (30, 32, 34), lesdits moyens de refroidissement (30, 32, 34) évacuant un flux thermique d'au moins 10 kw/m$^2$ pour provoquer la cristallisation des hydrures, ainsi qu'une couche d'un isolant thermique (42) disposé sur une paroi de ladite cheminée (18), cette couche d'isolant (42) ayant pour fonction de limiter l'échange thermique sur la paroi de ladite cheminée (18), et en ce que la seconde enceinte (1b), située sous la première (1a), raccordée à celle-ci par une bride (64a) contient plusieurs éléments de rétention (58) concentriques séparés par des viroles (60), baignés par le courant de métal descendant en provenance des distributeurs (10b) situés au sommet de l'enceinte (1b) et alimentés par le métal sortant de la partie annulaire périphérique de l'enceinte (1a), une cheminée centrale (62b) raccordée à la cheminée centrale (62a) de l'enceinte (1a) étant également prévue pour la remontée du métal dans l'enceinte (1b).

3. Piège froid pour purifier un métal liquide contenant de l'oxygène et de l'hydrogène en solution, comportant :
   - deux enceintes (1c, 1d) de circulation du métal liquide,
   - un conduit d'alimentation (8d) pour introduire ledit métal liquide à purifier dans l'enceinte (1c),
   - un distributeur (10) pour répartir le métal liquide à la périphérie de l'enceinte,
   - un échangeur économiseur (12d) pour abaisser la température du métal entrant et réchauffer le métal sortant,
   - des moyens de refroidissement (30, 32, 34) situés à l'extérieur de l'enceinte (1c) et en aval du distributeur (10) pour créer une zone de refroidissement (28) du métal liquide à purifier,
   - au moins un élément de rétention (58) en aval des moyens de refroidissement,
   - un conduit d'évacuation (70) pour évacuer le métal liquide purifié,

caractérisé en ce qu'il comporte des structures d'accrochage (44) des hydrures, ces structures d'accrochage étant situées à l'intérieur de l'enceinte (1c) et au niveau des moyens de refroidissement extérieurs (30, 32, 34), lesdits moyens de refroidissement (30, 32, 34) évacuant un flux thermique d'au moins 10 kw/m$^2$ pour provoquer la cristallisation des hydrures, en ce que la seconde enceinte (1d) reliée à la première enceinte (1c) par une canalisation (68) contient plusieurs éléments de rétention (58) séparés par des viroles (60) et en ce que le conduit d'évacuation (70) du métal purifié, hors de l'enceinte (1d), débouche dans l'échangeur économiseur (12d), extérieur aux enceintes (1c) et (1d) au travers duquel pénètre le métal liquide chaud à purifier par le conduit d'alimentation (8d) dans la première enceinte (1c).

4. Piège froid selon l'une quelconque des revendications 1 à 3, caractérisé en ce que les moyens de refroidissement (30, 32, 34) sont constitués par plusieurs modules de refroidissement qui peuvent être mis en oeuvre indépendamment l'un de l'autre.

5. Piège froid selon l'une quelconque des revendications 1 à 3, caractérisé en ce que les structures d'accrochage (44) sont constituées par des anneaux fixés à l'intérieur de l'enceinte et espacés de la paroi de cette enceinte.

6. Piège froid selon la revendication 5, caractérisé en ce que les anneaux comportent des languettes (46, 50, 52) faisant saillie au moins d'un côté de l'anneau.

7. Piège froid selon la revendication 5, caractérisé en ce que les anneaux comportent des orifices (48) destinés à provoquer des turbulences.

8. Piège froid selon la revendication 5, caractérisé en ce que les anneaux sont constitués au moins partiellement par une toile métallique (54).

**Claims**

1. Cold trap for purifying a liquid metal containing oxygen and hydrogen in solution comprising a liquid metal circulation enclosure (1), a supply pipe (8) for introducing the liquid metal to be purified into the enclosure (1), a distributor (10) for distributing the liquid metal on the enclosure periphery, a central passage (18) defining for the liquid metal a hairpin-like path between an annular zone for the dropping of the said metal and a central raising zone with a view to the discharge thereof, an economizer exchanger (12) for lowering the temperature of the entering metal and for heating the exiting metal, cooling means (30, 32, 34) located outside the enclosure (1) and downstream of the distributor (10), in order to create a cooling zone (28) for the liquid metal to be purified, at least one retention element (58) downstream of the cooling means and a discharge pipe (22) for discharging the purified liquid metal, characterized in that it comprises structures (44) for the attachment of hydrides, said attachment structures being located within the enclosure (1) and level with the external cooling means (30, 32, 34), which evacuate a heat flux of at least 10 kw/m$^2$ in order to bring about the crystallization of the hydrides, as well as a thermal insulant layer (42) placed on the wall of said passage (18), said insulant layer (42) having the function of limiting the heat exchange on the wall of said passage (18).

2. Cold trap for purifying liquid metal containing oxygen and hydrogen in solution comprising two liquid metal circulation enclosures (1a, 1b), a supply pipe (8) for introducing the liquid metal to be purified into the enclosure (1a), a distributor (10) for distributing the liquid metal on the periphery of the enclosure (1a), a central passage (18) defining for the liquid metal a hairpin-like path between an annular zone for the dropping of said metal and a central raising zone with a view to the discharge thereof, an economizer exchanger (12) for lowering the temperature of the entering metal and heating the exiting metal, cooling means (30, 32, 34) located outside the enclosure (1a) and downstream of the distributor (10) in order to create a cooling zone (28) for the liquid metal to be purified, at least one retention element (58) downstream of the cooling means and a discharge pipe (22) for discharging the purified liquid metal, characterized in that it comprises structures for the attachment of hydrides, said attachment structures being located within the enclosure (1a) and level with the external cooling means (30, 32, 34), which evacuate a heat flux of at least 10 kw/m$^2$ in order to bring about the crystallization of the hydrides, as well as a thermal insulant layer (42) located on a wall of the said passage (18), the function of said insulant layer (42) being to limit the heat exchange on the wall of said passage (18) and in that the second enclosure (1b), located beneath the first enclosure (1a) and connected thereto by a flange (64a) contains several concentric retention elements (58) separated by ferrules (60), immersed in the descending metal flow from the distributors (10b) located at the top of the enclosure (1b) and supplied by the metal leaving the peripheral annular part of the enclosure (1a), a central passage (62b) connected to the central passage (62a) of the enclosure (1a) also being provided for the raising of the metal into the enclosure (1b).

3. Cold trap for purifying a liquid metal containing oxygen and hydrogen in solution comprising two liquid metal circulation enclosures (1c, 1d), a supply pipe (8d) for introducing the liquid metal to be purified into the enclosure (1c), a distributor (10) for distributing the liquid metal on the enclosure periphery, an economizer exchanger (12d) for lowering the temperature of the entering metal and heating the biting metal, cooling means (30, 32, 34) located on the exterior of the enclosure (1c) and downstream of the distributor (10) to create a cooling zone (28) for the liquid metal to be purified, at least one retention element (58) downstream of the cooling means and a discharge pipe (70) for discharging the purified liquid metal, characterized in that it comprises attachment structures (44) for the hydrides, said attachment structures being located within the enclosure (1c) and level with the external cooling means (30, 32, 34), which evacuate a heat flux of at least 10 kw/m$^2$ to bring about the crystallization of the hydrides, in that the second enclosure (1d) connected to the first enclosure (1c) by a duct (68) contains several retention elements (58) separated by ferrules (60) and in that the pipe (70) for discharging the purified metal from the enclosure (1d) issues into the economizer exchanger (12d), outside the enclosures (1c and 1d), across which the hot liquid metal to be purified passes by means of the supply pipe (8d) into the first enclosure (1c).

4. Cold trap according to any one of the claims 1 to 3, characterized in that the cooling means (30, 32, 34) are constituted by several cooling modules, which can be used independently of one another.

5. Cold trap according to any one of the claims 1 to 3, characterized in that the attachment structures (44) are constituted by rings feed to the interior of the enclosure and spaced from the enclosure wall.

6. Cold trap according to claim 5, characterized in that the rings have tongues (46, 50, 52) projecting at least from one see of the ring.

7. Cold trap according to claim 5, characterized in that the rings have orifices (48) for causing turbulence.

8. Cold trap according to claim 5, characterized in that the rings are at least partly formed by a metal gauze (54).

**Patentansprüche**

1. Kältefalle zum Reinigen eines flüssigen Metalls, das Sauerstoff und Wasserstoff in Lösung enthält, mit :
   - einem Zirkulationsbehälter (1) für das flüssige Metall,
   - einer Versorgungsleitung (8), um das zu reinigende, flüssige Metall in den Behälter (1) einzuführen,
   - einem Verteiler (10), um das flüssige Metall an der Peripherie des Behälters zu verteilen,
   - einem zentralen Kamin (18), der für das flüssige Metall einen Haarnadelweg zwischen einem ringförmigen Abstiegsbereich für dieses Metall und einem zentralen Aufstiegsbereich für seine Entfernung bildet,
   - einem Sparwärmetauscher (12), um die Temperatur des eintretenden Metalls zu senken und die des austretenden Metalls zu erhöhen,
   - Abkühlvorrichtungen (30, 32, 34), die sich außerhalb des Behälters (1) und unterhalb des Verteilers (10) befinden, um eine Abkühlungszone (28) für das zu reinigenden, flüssige Metall zu bilden,
   - wenigstens einem Rückhalteelement (58) unterhalb der Abkühlvorrichtungen,
   - einer Auslaßleitung (22), um das gereinigte, flüssige Metall zu entfernen,

   dadurch gekennzeichnet, daß sie Einfangstrukturen (44) für Hydride, wobei sich diese Einfangstrukturen im Innern des Behälters (1) auf der Höhe der äußeren Abkühlvorrichtungen (30, 32, 34) befinden, wobei diese Abkühlvorrichtungen (30, 32, 34) einen thermischen Fluß von wenigstens 10 kW/m$^2$ entfernen, um die Kristallisation von Hydriden zu bewirken, ebenso wie eine thermisch isolierende Schicht (42) aufweist, die auf einer Wand des Kamins (18) angeordnet ist, wobei diese Isolierschicht (42) die Funktion der Begrenzung des thermischen Austauschs auf der Wand des Kamins (18) besitzt.

2. Kältefalle zum Reinigen eines flüssigen Metalls, das Sauerstoff und Wasserstoff in Lösung enthält, mit :

- zwei Zirkulationsbehältern (1a, 1b) für das flüssige Metall,
- einer Versorgungsleitung (8), um das zu reinigende, flüssige Metall in den Behälter (1a) einzuführen,
- einem Verteiler (10), um das flüssige Metall an der Peripherie des Behälters (1a) zu verteilen,
- einem zentralen Kamin (18), der für das flüssige Metall einen Haarnadelweg zwischen einem ringförmigen Abstiegsbereich für dieses Metall und einem zentralen Aufstiegsbereich für seine Entfernung bildet,
- einem Sparwärmetauscher (12), um die Temperatur des eintretenden Metalls zu senken und die des austretenden Metalls zu erhöhen,
- Abkühlvorrichtungen (30, 32, 34), die sich außerhalb des Behälters (1a) und unterhalb des Verteilers (10) befinden, um eine Abkühlungszone (28) für das zu reinigenden, flüssige Metall zu bilden,
- wenigstens einem Rückhalteelement (58) unterhalb der Abkühlvorrichtungen,
- einer Auslaßleitung (22), um das gereinigte, flüssige Metall zu entfernen,

dadurch gekennzeichnet, daß sie Einfangstrukturen (44) für Hydride, wobei sich diese Einfangstrukturen im Innern des Behälters (1a) auf der Höhe der äußeren Abkühlvorrichtungen (30, 32, 34) befinden, wobei diese Abkühlvorrichtungen (30, 32, 34) einen thermischen Fluß von wenigstens 10 kW/m$^2$ entfernen, um die Kristallisation von Hydriden zu bewirken, ebenso wie eine thermisch isolierende Schicht (42) aufweist, die auf einer Wand des Kamins (18) angeordnet ist, wobei diese Isolierschicht (42) die Funktion der Begrenzung des thermischen Austauschs auf der Wand des Kamins (18) besitzt, und daß der zweite Behälter (1b), der sich unter dem ersten (1a) befindet und an diesem über einen Flansch (64a) befestigt ist, mehrere konzentrische Festhalteelemente (58) enthält, die durch Ringe (60) getrennt sind und die in dem von den Verteilern (10b), die sich auf der Spitze des Behälters (10b) befinden und von dem von dem peripheren, ringförmigen Bereich des Behälters (1a) herkommenden Metall versorgt werden, herabkommenden Metallstrom umspült werden, wobei ein zentraler Kamin (62b), der mit dem zentralen Kamin (62a) des Behälters (1a) verbunden ist, ebenfalls für das Aufsteigen des Metalls in dem Behälter (1b) vorgesehen ist.

3. Kältefalle zum Reinigen eines flüssigen Metalls, das Sauerstoff und Wasserstoff in Lösung enthält, mit :
- zwei Zirkulationsbehältern (1c, 1d) für das flüssige Metall,
- einer Versorgungsleitung (8d), um das zu reinigende, flüssige Metall in den Behälter (1c) einzuführen,
- einem Verteiler (10), um das flüssige Metall an der Peripherie des Behälters (1a) zu verteilen,
- einem Sparwärmetauscher (12d), um die Temperatur des eintretenden Metalls zu senken und die des austretenden Metalls zu erhöhen,
- Abkühlvorrichtungen (30, 32, 34), die sich außerhalb des Behälters (1c) und unterhalb des Verteilers (10) befinden, um eine Abkühlungszone (28) für das zu reinigenden, flüssige Metall zu bilden,
- wenigstens einem Rückhalteelement (58) unterhalb der Abkühlvorrichtungen,
- einer Auslaßleitung (70), um das gereinigte, flüssige Metall zu entfernen,

dadurch gekennzeichnet, daß sie Einfangstrukturen (44) für Hydride aufweist, wobei sich diese Einfangstrukturen im Innern des Behälters (1c) auf der Höhe der äußeren Abkühlvorrichtungen (30, 32, 34) befinden, wobei diese Abkühlvorrichtungen (30, 32, 34) einen thermischen Fluß von wenigstens 10 kW/m$^2$ entfernen, um die Kristallisation von Hydriden zu bewirken, und daß der zweite Behälter (1d) über einen Kanal (68) mit dem ersten (1c) verbunden ist und mehrere Festhalteelemente (58) enthält, die durch Ringe (60) getrennt sind, und daß die Auslaßleitung (70) für das gereinigte Metall aus dem Behälter (1c) in den Sparwärmetauscher (12d) außerhalb der Behälter (1c) und (1d) mündet, durch den das warme, zu reinigenden, flüssige Metall durch die Versorgungsleitung (8d) in den ersten Behälter (1c) mündet.

4. Kältefalle nach einem der Ansprüche 1 bis 3, dadurch gekennzeichnet, daß die Abkühlvorrichtungen (30, 32, 34) aus mehreren Abkühlmodulen bestehen, die voneinander unabhängig in Betrieb genommen werden können.

5. Kältefalle nach einem der Ansprüche 1 bis 3, dadurch gekennzeichnet, daß die Festhaltestrukturen (44) aus Ringen bestehen, die im Innern des Behälters befestigt und von der Wand dieses Behälters getrennt sind.

6. Kältefalle nach Anspruch 5, dadurch gekennzeichnet, daß die Ringe Zungen (46, 50, 52) aufweisen, die auf wenigstens einer Seite des Ringes vorstehen.

**7.** Kältefalle nach Anspruch 5, dadurch gekennzeichnet, daß die Ringe Öffnungen (48) aufweisen, die dazu bestimmt sind, Turbulenzen zu verursachen.

**8.** Kältefalle nach Anspruch 5, dadurch gekennzeichnet, daß die Ringe wenigstens teilweise aus einem Drahtnetz bestehen.

FIG. 1

FIG. 2

FIG. 3

2

46

FIG. 4 a

44 a

FIG. 4 b

44 b

48

52

50

44 c

FIG. 4 c

44 d

FIG. 4 d

54